# EUROPÄISCHE PATENTSCHRIFT

(11) **EP 2 789 029 B1**
(45) Veröffentlichungstag und Bekanntmachung des Hinweises auf die Patenterteilung: **08.07.2015**
(21) Anmeldenummer: 12769933.8
(22) Anmeldetag: 02.10.2012
(51) Int. Cl.: H01M 2/10, H01M 10/04, H01M 10/625, H01M 10/647, H01M 10/6556, H01M 2/20, H01M 10/653, H01M 10/6553, H01M 10/6554, H01M 10/6567, H01M 10/6571, H01M 10/6572, H01M 10/663, H01M 10/6561

(54) **BATTERIE UND ZELLBLOCK FÜR EINE BATTERIE**
BATTERY AND CELL BLOCK FOR A BATTERY
BATTERIE ET BLOC D'ÉLÉMENTS D'UNE BATTERIE

(30) Priorität: 07.12.2011 DE 102011120511
(43) Veröffentlichungstag der Anmeldung: 15.10.2014
(73) Patentinhaber: Daimler AG, 70327 Stuttgart (DE)
(72) Erfinder: BROMMER, Christian, 73230 Kirchheim (DE); KAUFMANN, Rainer, 70597 Stuttgart (DE); MEINTSCHEL, Jens, 02994 Bernsdorf (DE); SCHRÖTER, Dirk, 71364 Winnenden (DE)
(74) Vertreter: JENSEN & SON
(86) Internationale Anmeldenummer: PCT/EP2012/004135
(87) Internationale Veröffentlichungsnummer: WO 2013/083214

(56) Entgegenhaltungen:
- DE-A1-102008 010 813
- DE-A1-102008 034 867
- DE-A1-102008 059 961
- US-A- 5 756 227
- US-A1- 2006 115 719

## Beschreibung

Die Erfindung betrifft einen Zellblock für eine Batterie nach den Merkmalen des Oberbegriffs des Anspruchs 1 und eine Batterie nach den Merkmalen des Oberbegriffs des Anspruchs 8.

Aus dem Stand der Technik sind Batterien für Fahrzeuganwendungen allgemein bekannt, insbesondere Traktionsbatterien zur Speicherung elektrischer Energie für einen Antrieb des Fahrzeugs. Diese Batterien umfassen eine Mehrzahl seriell und/oder parallel elektrisch miteinander verschalteter elektrochemischer Einzelzellen, die mit der dazugehörenden Elektronik und Temperierung in einem gemeinsamen Gehäuse angeordnet sind. Zur Temperierung umfassen die Batterien beispielsweise jeweils zumindest eine Temperierplatte, welche direkt von einem Fluid durchflossen ist, zum Beispiel von Wasser, einem Klimamittel oder Luft, und direkt oder über eine Wärmeleitfolie oder Vergussmasse mit den Einzelzellen thermisch gekoppelt ist.

Die Einzelzellen sind in sogenannten Zellblöcken, auch als Zellverbünde bezeichnet, zusammengefasst, die jeweils eine gewisse Anzahl von Einzelzellen inklusive deren mechanischer Fixierung und elektrischer Kontaktierung umfassen. Bei rechteckigen, als Flachzellen ausgebildeten Einzelzellen, beispielsweise Pouchzellen oder prismatische Einzelzellen, werden diese und ihre Halterung bzw. die kompletten Einzelzellen bei bipolaren Rahmenflachzellen über Spannmittel durch Druckplatten verpresst. Dadurch wird ein stabiler Zellblock ausgebildet. Als Spannmittel zum Aufbringen der Kraft auf die Druckplatten werden zum Beispiel Zuganker oder Spannbänder verwendet.

DE 10 2008 059961 A1 und DE 10 2008 010813 A1 geben Zellblöcke aus elektrochemischen Flachzellen an, welche zueinander parallel ausgerichtet und hintereinander angeordnet sind. Zusätzlich sind Spannelemente und eine Temperierplatte vorhanden.

Der Erfindung liegt die Aufgabe zu Grunde, einen verbesserten Zellblock für eine Batterie und eine verbesserte Batterie anzugeben.

Die Aufgabe wird erfindungsgemäß gelöst durch einen Zellblock für eine Batterie mit den Merkmalen des Anspruchs 1 und eine Batterie mit den Merkmalen des Anspruchs 8.

Vorteilhafte Ausgestaltungen der Erfindung sind Gegenstand der Unteransprüche.

Ein Zellblock für eine Batterie umfasst eine Mehrzahl seriell und/oder parallel elektrisch miteinander verschalteter elektrochemischer Einzelzellen, welche als Flachzellen ausgebildet sind, im Zellblock im Wesentlichen parallel zueinander ausgerichtet und hintereinander angeordnet sind und mittels zumindest eines Spannelementes miteinander verspannt sind.

Flachzellen weisen zwei gegenüberliegende Stirnflächen auf, die wesentlich größer sind als umlaufende Randflächen. Derartige Flachzellen sind beispielsweise als so genannte bipolare Rahmenflachzellen, Pouchzellen bzw. Coffeebag-Zellen mit einer folienartigen Umhüllung oder als prismatische Flachzellen ausgebildet.

Im Wesentlichen parallel zueinander ausgerichtet bedeutet, dass die Einzelzellen im Rahmen üblicher Produktions- und Fertigungstoleranzen parallel zueinander ausgerichtet sind.

Erfindungsgemäß ist das Spannelement als eine Temperierplatte zur Temperierung der Einzelzellen ausgebildet, welche an einer Längsseite des Zellblocks angeordnet und mit den Einzelzellen thermisch gekoppelt ist.

Durch das Verspannen oder Verpressen, welches mittels der Temperierplatte zweckmäßigerweise mechanisch erfolgt, sind die Einzelzellen kraftschlüssig und/oder formschlüssig im Zellblock, fixiert und ein stabiler Zellblock, auch als Zellverbund bezeichnet, ist ausgebildet. Durch das Ausbilden des Spannelementes oder zumindest eines von mehreren Spannelementen als Temperierplatte ist eine Gewichts- und Kostenreduktion des Zellblocks sowie eine Verringerung eines zur Installation des Zellblocks in einer Batterie erforderlichen Bauraums erreicht, da durch die Temperierplatte aus dem Stand der Technik bekannte Spannelemente ersetzbar sind und der Zellblock daher kleiner ausgebildet ist. D. h. mit einem Bauteil, der Temperierplatte, sind gleichzeitig zwei Funktionen erfüllbar, das Verspannen der Einzelzellen zu einem Zellblock und das Temperieren der Einzelzellen, d. h. das Kühlen und/oder Erwärmen der Einzelzellen, um sie auf einer optimalen Betriebstemperatur oder in einem optimalen Betriebstemperaturbereich zu halten. Dazu ist die Temperierplatte beispielsweise von einem Temperiermedium durchströmbar oder durchströmt, zum Beispiel von Luft, Wasser oder von einem Klimamittel, und/oder mit einer Kältequelle und/oder einer Wärmequelle thermisch gekoppelt, zum Beispiel mit zumindest einem Peltierelement oder mit zumindest einer als ein so genanntes Heizpad ausgebildeten Heizeinheit. Dieses Peltierelement bzw. das Heizpad ist beispielsweise auf einer von den Einzelzellen abgewandten Rückseite der Temperierplatte angeordnet.

Die Temperierplatte ist entweder direkt oder beispielsweise über eine elektrisch isolierende Wärmeleitfolie oder eine elektrisch isolierende und gut Wärme leitende Vergussmasse mit den Einzelzellen thermisch gekoppelt. Über die Wärmeleitfolie bzw. die Vergussmasse ist zudem ein Toleranzausgleich zwischen den Einzelzellen und der Temperierplatte ermöglicht, so dass auch bei auftretenden Toleranzen eine gute und sichere thermische Kopplung der Temperierplatte mit den Einzelzellen sichergestellt ist. Eine derartige elektrisch isolierende Wärmeleitfolie oder Vergussmasse ist beispielsweise erforderlich, wenn die Temperierplatte mit einem als Polkontakt dienenden und daher elektrisch leitfähigen Gehäuse der Einzelzellen oder mit Zellpolen der Einzelzellen oder über Zellverbinder mit den Einzelzellen thermisch gekoppelt ist. Des Weiteren ist, alternativ oder zusätzlich, beispielsweise auch eine thermische Kopplung der Temperierplatte mit den Einzelzellen über Kühlstäbe oder Kühlbleche möglich, wenn erforderlich auch unter Verwendung der Wärmeleitfolie oder Vergussmasse.

Zweckmäßigerweise ist die Temperierplatte ein Bestandteil einer Spannanordnung, wobei die Spannanordnung zwei Druckplatten aufweist, welche an jeweils einer Querseite des Zellblocks angeordnet sind, d. h. an jeweils einer Stirnseite des Zellblocks. Des Weiteren weist die Spannanordnung zumindest ein Verbindungselement zum Verbinden zumindest einer der Druckplatten mit der Temperierplatte auf. Die Temperierplatte ist zwischen den Druckplatten angeordnet, um eine Spannkraft oder Presskraft von einer Druckplatte zur anderen, d. h. von einer Seite des Zellblocks zur anderen zu leiten. Das Verbindungselement ist derart ausgebildet, dass es eine längenvariable Verbindung der Druckplatte mit der Temperierplatte ermöglicht, so dass Toleranzen ausgleichbar sind und eine vorgegebene Verspannung oder Verpressung durch eine zunehmende Annäherung der Druckplatte an die Temperierplatte und daraus resultierend eine zunehmende Annäherung der beiden Druckplatten zueinander einstellbar ist. Mit einer der Druckplatten kann die Temperierplatte fest verbunden sein, beispielsweise durch eine stoff-, form- und/oder kraftschlüssige Verbindung, zum Beispiel durch Verschweißen oder Verschrauben. Es können jedoch auch beide Druckplatten mit der Temperierplatte mittels Verbindungselementen verbunden sein, so dass ein Verspannen der Einzelzellen durch zunehmende Annäherung beider Druckplatten an die Temperierplatte mittels der Verbindungselemente und eine daraus resultierende zunehmende Annäherung der Druckplatten zueinander ermöglicht ist.

In einer zweckmäßigen Ausführungsform ist das Verbindungselement als Schraube zum Verschrauben zumindest einer der Druckplatten mit der Temperierplatte ausgebildet. Es sind selbstverständlich auch eine Mehrzahl derartiger Verbindungselemente möglich, welche beispielsweise als Schrauben ausgebildet sind. Diese Schrauben sind längenvariable Verbindungselemente, da sie durch ein zunehmendes Hineinschrauben in die Temperierplatte eine zunehmende Annäherung der Druckplatte an die Temperierplatte ermöglichen. In einer alternativen Ausführungsform kann das Verbindungselement beispielsweise auch als eine Gewindestange ausgebildet sein, welche fest in der Temperierplatte angeordnet ist. Die Druckplatte ist dann auf die Gewindestange aufschiebbar und mittels einer auf die Gewindestange aufzuschraubenden Schraubenmutter an die Temperierplatte anzuschrauben, wodurch sie sich zunehmend an die Temperierplatte annähert und wodurch sich die Druckplatten zunehmend einander nähern, unter zunehmendem Verspannen der dazwischen angeordneten Einzelzellen.

Zweckmäßigerweise weisen die Einzelzellen randseitige Rahmenelemente auf oder sind im Zellblock von randseitigen Rahmenelementen zumindest bereichsweise umschlossen, wobei die Temperierplatte maximal so lang ist wie alle parallel zueinander ausgerichteten und hintereinander angeordneten Rahmenelemente des Zellblocks zusammen. Auf diese Weise ist ein festes Verspannen der Einzelzellen bei einer vollständigen Annäherung der Druckplatten an die Temperierplatte sichergestellt. Um dies auch bei Breitentoleranzen der Rahmenelemente sicherzustellen, ist es vorteilhaft, wenn die Temperierplatte etwas kürzer ausgebildet ist, so dass auch bei einer etwas dünneren Ausbildung einiger Rahmenelemente die Einzelzellen durch die Druckplatten noch ausreichend verspannt sind.

In einer vorteilhaften Ausführungsform weist der Zellblock zwei Temperierplatten auf, welche an gegenüberliegenden Längsseiten des Zellblocks angeordnet sind. Auf diese Weise sind alle aus dem Stand der Technik bekannten Spannmittel durch die Temperierplatten zu ersetzen, d. h. der Zellblock ist lediglich mittels der Temperierplatten, der Druckplatten und der Verbindungselemente sicher verspannt, so dass keine weiteren Spannelemente erforderlich sind, welche zusätzliches Gewicht, zusätzliche Kosten und einen zusätzlichen Bauraumbedarf erfordern würden. Des Weiteren ist auf diese Weise die Temperierung der Einzelzellen optimiert, da diese von zwei gegenüberliegenden Seiten über deren gesamte Ausdehnung relativ gleichmäßig und sicher zu temperieren sind. Es ist natürlich auch möglich, dass an drei Längsseiten oder an allen vier Längsseiten des Zellblocks jeweils eine Temperierplatte angeordnet ist. Auf diese Weise ist, wenn dies erforderlich ist, die Temperierung der Einzelzellen und zusätzlich auch deren Verspannung weiter zu verbessern. Des Weiteren ist natürlich auch eine andere Anordnung von zwei Temperierplatten am Zellblock möglich, d. h. nicht an gegenüber liegenden Längsseiten, sondern an aneinander angrenzenden Längsseiten.

In einer zweckmäßigen Ausführungsform umfasst der Zellblock zumindest ein weiteres Spannelement zum Verspannen der Einzelzellen, insbesondere zum mechanischen Verspannen. Dies ist insbesondere zweckmäßig, wenn lediglich eine Temperierplatte am Zellblock angeordnet und als Spannelement verwendet ist. In diesem Fall ist, um eine ordnungsgemäße Verspannung sicherzustellen, im Bereich der gegenüberliegenden Längsseite ebenfalls eine Verspannung erforderlich, welche mittels eines oder mehrerer weiterer Spannelemente realisierbar ist.

Vorzugsweise ist das weitere Spannelement als ein Zuganker oder als ein Spannband ausgebildet. Ein Spannband umspannt den gesamten Zellblock inklusive der beiden Druckplatten in Längsrichtung, wobei die Einzelzellen durch Anspannen des Spannbandes zu verspannen und zu verpressen sind. Ein Zuganker ist in Längsrichtung des Zellblocks an diesem entlang von einer Druckplatte zur anderen angeordnet und durch diese hindurch geführt. Er ist beispielsweise als Gewindestange ausgebildet, welche an einem Ende oder an beiden Enden ein Gewinde aufweist, so dass die Druckplatten durch Aufschrauben von Schraubenmuttern auf das Gewinde gegeneinander zu verspannen sind. Weist der Zuganker nur an einem Ende ein derartiges Gewinde auf, so ist er mit dem anderen Ende auf andere Weise an der jeweiligen Druckplatte stoff-, form- und/oder kraftschlüssig befestigt, beispielsweise mit dieser verschweißt.

Eine erfindungsgemäße Batterie umfasst zumindest einen derartigen Zellblock. Durch das Ausbilden des Spannelementes oder zumindest eines von mehreren Spannelementen als Temperierplatte ist eine Gewichts- und Kostenreduktion des Zellblocks und dadurch auch der Batterie sowie eine Verringerung eines zur Installation des Zellblocks in der Batterie erforderlichen Bauraums erreicht, da durch die Temperierplatte aus dem Stand der Technik bekannte Spannelemente ersetzbar sind und der Zellblock daher kleiner ausgebildet ist. D. h. mit einem Bauteil, der Temperierplatte, sind gleichzeitig zwei Funktionen erfüllbar, das Verspannen der Einzelzellen zu einem Zellblock und das Temperieren der Einzelzellen, d. h. das Kühlen und/oder Erwärmen der Einzelzellen, um sie auf einer optimalen Betriebstemperatur oder in einem optimalen Betriebstemperaturbereich zu halten. Aufgrund des geringeren erforderlichen Bauraums für den Zellblock in der Batterie ist auch die Batterie kleiner ausgebildet, so dass auch die Batterie einen geringeren Bauraum beispielsweise in einem Fahrzeug erfordert.

Vorzugsweise umfasst die Batterie eine Mehrzahl elektrisch seriell und/oder parallel miteinander verschalteter Zellblöcke. Auf diese Weise ist eine Batterie ausgebildet, welche eine für einen jeweiligen Verwendungszweck erforderliche Spannung, Stromstärke und Speicherkapazität aufweist.

Die Batterie ist zweckmäßigerweise eine Fahrzeugbatterie, insbesondere eine Traktionsbatterie für ein Elektrofahrzeug, für ein Fahrzeug mit Hybridantrieb oder für ein Brennstoffzellenfahrzeug. Eine derartige Traktionsbatterie dient als Energiespeicher für elektrische Energie zum Antrieb des Fahrzeugs. Insbesondere aufgrund der ermöglichten kleineren Ausbildung des Zellblocks und dadurch der Batterie, welche einen oder mehrere dieser Zellblöcke aufweist, ist eine Bauraum- und Gewichtsreduktion erreicht, welche insbesondere für einen Einsatz als Traktionsbatterie in einem Elektrofahrzeug, in einem Fahrzeug mit Hybridantrieb oder in einem Brennstoffzellenfahrzeug von großer Bedeutung ist, in welchem nur ein begrenzter Bauraum für die Batterie oder eine Mehrzahl derartiger Batterien zur Verfügung steht. Durch die Bauraumreduktion sind weitere derartige Batterien einzusetzen und dadurch beispielsweise eine Reichweite des Fahrzeugs zu steigern oder es steht bei gleich bleibender Batterieanzahl ein größerer Raum im Fahrzeug für Passagiere und Gepäck zur Verfügung. Des Weiteren ist durch die erreichte Gewichtsreduktion ein Energieverbrauch des Fahrzeugs aufgrund des geringeren Gewichts erreicht, so dass dessen Reichweite erhöht ist, und zudem ist aufgrund eines geringeren Leergewichts des Fahrzeugs eine höhere mögliche Zuladung in das Fahrzeug erreicht. Durch die erreichte Kostenreduktion des Zellblocks und der Batterie ist bei einem derartigen Einsatz als Fahrzeugbatterie zudem auch eine Kostenreduktion des Fahrzeugs erreicht.

Ausführungsbeispiele der Erfindung werden im Folgenden anhand von Zeichnungen näher erläutert.

Dabei zeigen:
- Fig. 1: schematisch eine Teilexplosionsdarstellung einer ersten Ausführungsform eines Zellblocks,
- Fig. 2: schematisch eine perspektivische Darstellung einer ersten Ausführungsform eines Zellblocks,
- Fig. 3: schematisch eine Längsschnittdarstellung einer ersten Ausführungsform eines Zellblocks,
- Fig. 4: schematisch eine Querschnittdarstellung einer ersten Ausführungsform eines Zellblocks,
- Fig. 5: schematisch eine Teilexplosionsdarstellung einer zweiten Ausführungsform eines Zellblocks,
- Fig. 6: schematisch eine perspektivische Darstellung einer zweiten Ausführungsform eines Zellblocks,
- Fig. 7: schematisch eine Längsschnittdarstellung einer zweiten Ausführungsform eines Zellblocks,
- Fig. 8: schematisch eine Teilexplosionsdarstellung einer dritten Ausführungsform eines Zellblocks,
- Fig. 9: schematisch eine perspektivische Darstellung einer dritten Ausführungsform eines Zellblocks,
- Fig. 10: schematisch eine Längsschnittdarstellung einer dritten Ausführungsform eines Zellblocks und
- Fig. 11: schematisch eine Batterie.

PabstEinander entsprechende Teile sind in allen Figuren mit den gleichen Bezugszeichen versehen.

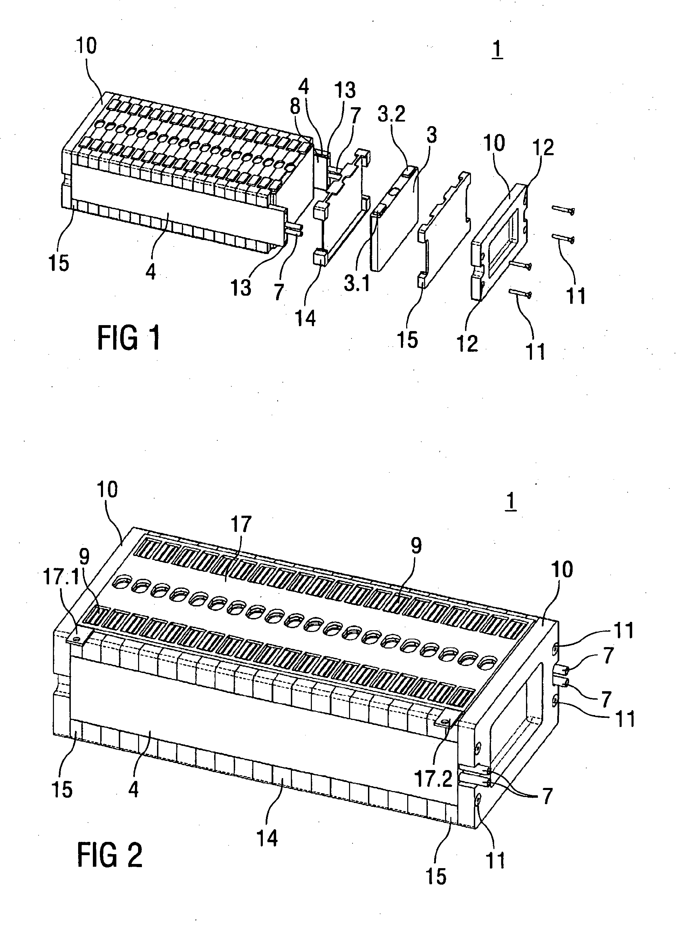

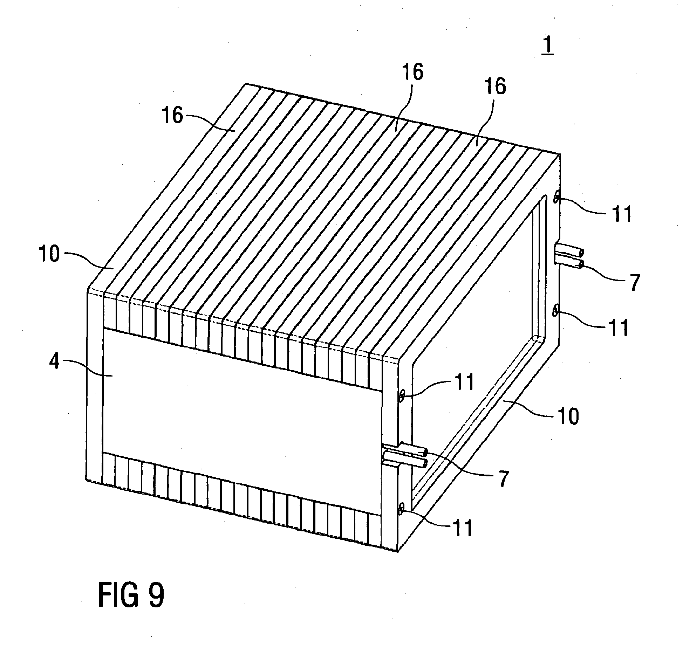

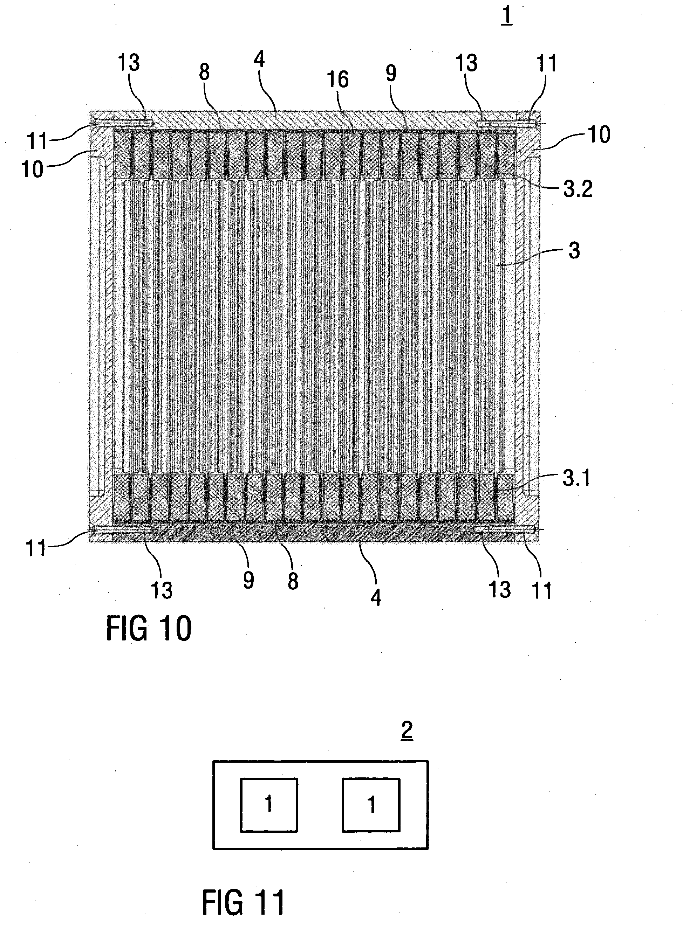

Die Figuren 1 bis 10 zeigen drei verschiedene Ausführungsformen eines Zellblocks 1 für eine Batterie 2 jeweils in verschiedenen schematischen Darstellungen. Ein derartiger Zellblock 1 wird auch als Zellverbund bezeichnet. Figur 11 zeigt eine Batterie 2 mit einer Mehrzahl derartiger Zellblöcke 1, welche elektrisch seriell und/oder parallel miteinander verschaltet sind.

Der Zellblock 1 weist jeweils eine Mehrzahl seriell und/oder parallel elektrisch miteinander verschalteter elektrochemischer Einzelzellen 3 auf, welche als Flachzellen ausgebildet sind und im Zellblock 1 im Wesentlichen parallel zueinander ausgerichtet und hintereinander angeordnet sind. Die als Flachzellen ausgebildeten Einzelzellen 3 weisen jeweils zwei gegenüberliegende Stirnflächen auf, die wesentlich größer sind als umlaufende Randflächen.

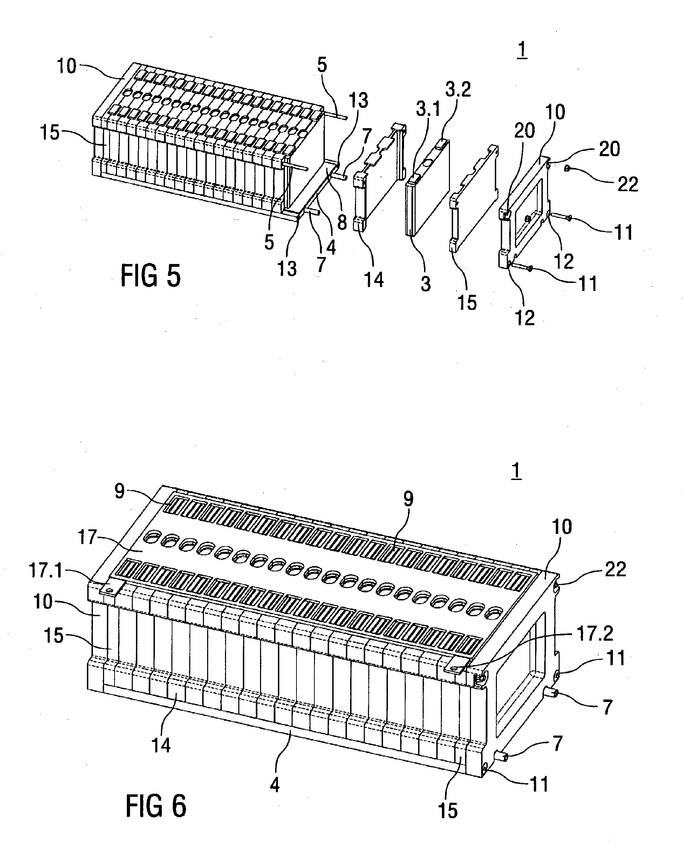

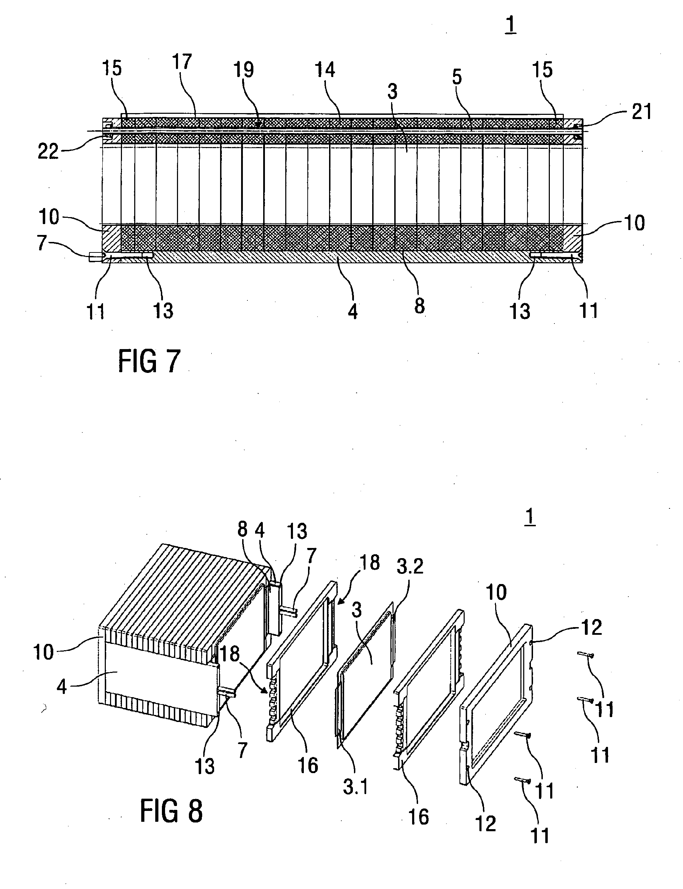

Im ersten, in den Figuren 1 bis 4 dargestellten Ausführungsbeispiel und im zweiten, in den Figuren 5 bis 7 dargestellten Ausführungsbeispiel sind die Einzelzellen 3 als prismatische Flachzellen ausgebildet, welche ein metallisches Zellgehäuse aufweisen, wobei Zellpole 3.1, 3.2 der jeweiligen Einzelzelle 3, d. h. ein elektrisch positiver und ein elektrisch negativer Pol, an einer oberen Längsseite der Einzelzelle 3 angeordnet sind. Im dritten, in den Figuren 8 bis 10 dargestellten Ausführungsbeispiel sind die Einzelzellen 3 als so genannte Pouchzellen ausgebildet, bei welchen eine elektrochemisch aktive Elektrodenfolieneinheit und Elektrolyt von einer folienartigen Umhüllung umgeben sind, welche randseitig verschweißt ist, wobei als Ableiterfahnen in Blechform ausgebildete Zellpole 3.1, 3.2 aus der Umhüllung herausgeführt sind. Des Weiteren sind als Flachzellen auch hier nicht näher dargestellte so genannte bipolare Rahmenflachzellen möglich, bei welchen ein Rahmen in die Einzelzelle 3 integriert ist und welche zwei elektrisch leitende metallische Hüllbleche aufweisen, die jeweils als ein Zellpol 3.1, 3.2 der Einzelzelle 3 ausgebildet sind.

Die Einzelzellen 3 sind mittels Spannelementen miteinander verspannt oder verpresst, um die Einzelzellen 3 auf diese Weise kraftschlüssig und/oder formschlüssig im Zellblock 1 zu fixieren und einen stabilen Zellblock 1 auszubilden. Dabei sind in der ersten, in den Figuren 1 bis 4 dargestellten Ausführungsform sowie in der dritten, in den Figuren 8 bis 10 dargestellten Ausführungsform alle Spannelemente als Temperierplatten 4 zur Temperierung der Einzelzellen 3 ausgebildet, welche an gegenüberliegenden Längsseiten des Zellblocks 1 angeordnet und mit den Einzelzellen 3 thermisch gekoppelt sind. Die zweite, in den Figuren 5 bis 7 dargestellte Ausführungsform weist lediglich ein derartiges als Temperierplatte 4 ausgebildetes Spannelement auf, so dass, um eine ordnungsgemäße Verspannung der Einzelzellen 3 sicherzustellen, weitere Spannelemente 5 erforderlich sind, welche nicht als Temperierplatte 4 ausgebildet sind. Diese weiteren Spannelemente 5 sind im Bereich einer der Temperierplatte 4 gegenüberliegenden Längsseite des Zellblocks 1, im zweiten Ausführungsbeispiel im Bereich einer Oberseite des Zellblocks 1 angeordnet.

Die Temperierplatten 4 dienen neben der Funktion als Spannelement zum Verspannen und Verpressen der Einzelzellen 3 zu einem Zellblock 1 des Weiteren einem Temperieren der Einzelzellen 3, d. h. dem Kühlen und/oder Erwärmen der Einzelzellen 3, um sie auf einer optimalen Betriebstemperatur oder in einem optimalen Betriebstemperaturbereich zu halten. Dazu sind die in den Ausführungsbeispielen dargestellten Temperierplatten 4 von Kanälen 6 durchzogen und von einem Temperiermedium durchströmbar oder durchströmt, zum Beispiel von Luft, Wasser oder von einem Klimamittel. Sie weisen dazu zwei Anschlusselemente 7 auf, über welche die jeweilige Temperierplatte 4 mit einem Temperierkreislauf zu koppeln ist, beispielsweise mit einem Klimakreislauf oder mit einem Kühlmittelkreislauf eines Fahrzeugs. Alternativ oder zusätzlich kann die jeweilige Temperierplatte 4 in weiteren, hier nicht dargestellten Ausführungsformen beispielsweise auch mit einer Kältequelle und/oder einer Wärmequelle thermisch gekoppelt sein, zum Beispiel mit zumindest einem Peltierelement oder mit zumindest einer als ein so genanntes Heizpad ausgebildeten Heizeinheit. Dieses Peltierelement bzw. das Heizpad ist beispielsweise auf einer von den Einzelzellen 3 abgewandten Rückseite der Temperierplatte 4 angeordnet.

Die Temperierplatten 4 sind entweder jeweils direkt oder, wie in den hier dargestellten Ausführungsformen, jeweils über eine elektrisch isolierende Wärmeleitfolie 8, welche zwischen den Einzelzellen 3 und der Temperierplatte 4 angeordnet ist, mit den Einzelzellen 3 thermisch gekoppelt. Alternativ zur Wärmeleitfolie 8 ist auch eine hier nicht dargestellte elektrisch isolierende und gut Wärme leitende Vergussmasse zwischen den Einzelzellen 3 und der jeweiligen Temperierplatte 4 möglich.

Mittels der Wärmeleitfolie 8 bzw. der Vergussmasse ist die jeweilige Temperierplatte 4 gegenüber den Einzelzellen 3 elektrisch isoliert. Zudem ist dadurch ein Toleranzausgleich zwischen den Einzelzellen 3 und der jeweiligen Temperierplatte 4 ermöglicht, so dass auch bei auftretenden Toleranzen eine gute und sichere thermische Kopplung der jeweiligen Temperierplatte 4 mit den Einzelzellen 3 sichergestellt ist.

Durch die elektrisch isolierende Wärmeleitfolie 8 oder in den hier nicht dargestellten Beispielen durch die Vergussmasse ist es ermöglicht, die Temperierplatte 4 mit einem metallischen und elektrisch leitfähigen Gehäuse der Einzelzellen 3 thermisch zu koppeln, wie in den Figuren 1 bis 7 im ersten und zweiten Ausführungsbeispielen anhand der als prismatische Flachzelle ausgebildeten Einzelzellen 3 dargestellt, welche ein derartiges metallisches Gehäuse aufweisen. Durch die Anordnung der jeweiligen elektrisch isolierenden Wärmeleitfolie 8 zwischen den Einzelzellen 3 und der jeweiligen Temperierplatte 4 ist die Temperierplatte 4 von den Einzelzellen 3 elektrisch isoliert, jedoch aufgrund einer sehr guten Wärmeleitfähigkeit der Wärmeleitfolie 8 sehr gut mit den Einzelzellen 3 thermisch gekoppelt.

Im dritten, in den Figuren 8 bis 10 dargestellten Ausführungsbeispiel sind die beiden Temperierplatten 4 über Zellverbinder 9 mit als Ableiterfahnen ausgebildeten Zellpolen 31, 3.2 der Einzelzellen 3 thermisch gekoppelt. Die als Ableiterfahnen ausgebildeten Zellpole 3.1, 3.2 sind mit den u-förmigen metallischen Zellverbindern 9 beispielsweise stoffschlüssig, zum Beispiel mittels Ultraschallschweißung oder Widerstandspressschweißung verbunden, so dass die Temperierplatten 4 über die Zellverbinder 9 und die als Ableiterfahnen ausgebildeten Zellpole 3.1, 3.2 mit einem Zellinneren der als Pouchzellen ausgebildeten Einzelzellen 3, d. h. mit der Elektrodenfolieneinheit und dem Elektrolyt thermisch gekoppelt sind. Zur elektrischen Isolation der Temperierplatten 4 gegenüber den Zellverbindern 9 ist auch hier jeweils eine Wärmeleitfolie 8 zwischen der jeweiligen Temperierplatte 4 und den Einzelzellen 3 bzw. den Zellverbindern 9 angeordnet.

In weiteren, hier nicht dargestellten Ausführungsformen ist, alternativ oder zusätzlich, beispielsweise auch eine thermische Kopplung der jeweiligen Temperierplatte 4 mit den Einzelzellen 3 über Kühlstäbe oder Kühlbleche möglich, wenn erforderlich auch unter Verwendung der Wärmeleitfolie 8 oder Vergussmasse.

Um das ordnungsgemäße Verspannen der Einzelzellen 3 im Zellblock 1 zu ermöglichen, sind die Temperierplatten 4 jeweils ein Bestandteil einer Spannanordnung. Eine derartige Spannanordnung weist zwei Druckplatten 10 auf, welche an jeweils einer Querseite des Zellblocks 1 angeordnet sind, d. h. an jeweils einer Stirnseite des Zellblocks 1. Des Weiteren weist die Spannanordnung Verbindungselemente 11 zum Verbinden der Druckplatten 10 mit der jeweiligen Temperierplatte 4 auf. Die Temperierplatten 4 sind jeweils zwischen den Druckplatten 10 angeordnet, um eine Spannkraft oder Presskraft von einer Druckplatte 10 zur anderen, d. h. von einer Seite des Zellblocks 1 zur anderen zu leiten. Die Verbindungselemente 11 sind derart ausgebildet, dass sie eine längenvariable Verbindung der Druckplatten 10 mit der jeweiligen Temperierplatte 4 ermöglichen, so dass Toleranzen ausgleichbar sind und eine vorgegebene Verspannung oder Verpressung durch eine zunehmende Annäherung der Druckplatten 10 an die jeweilige Temperierplatte 4 und daraus resultierend eine zunehmende Annäherung der beiden Druckplatten 10 zueinander einstellbar ist.

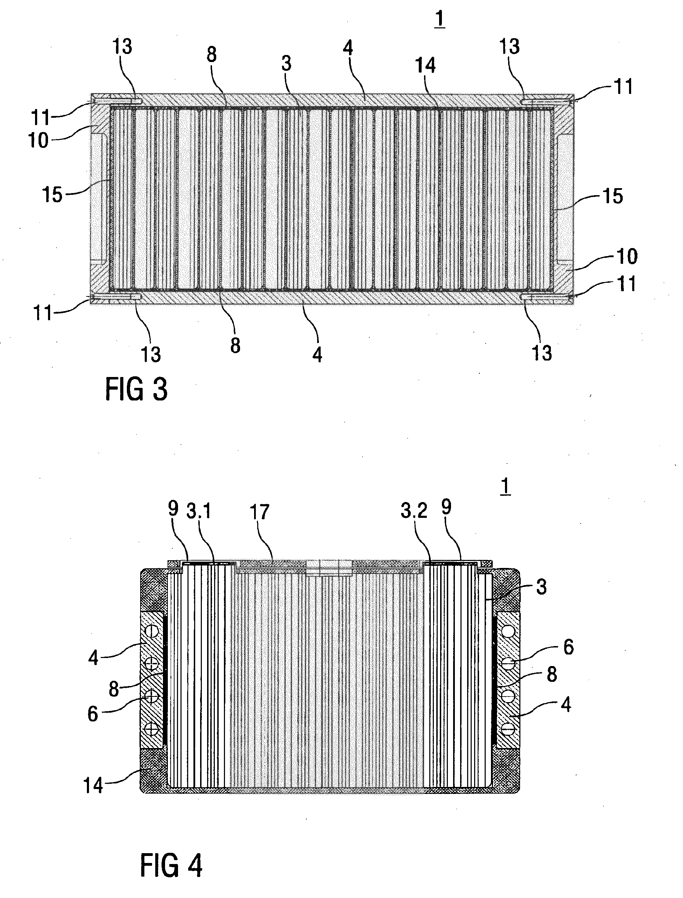

Die Verbindungselemente 11 sind beispielsweise, wie hier dargestellt, als Schrauben zum Verschrauben der Druckplatten 10 mit den Temperierplatten 4 ausgebildet, welche durch jeweils eine Öffnung 12 in der jeweiligen Druckplatte 10 hindurchgeführt und in die jeweilige Temperierplatte 4 hineingeschraubt sind, wobei ein Schraubenkopf im Bereich einer von der Temperierplatte 4 abgewandten Seite der jeweiligen Druckplatte 10 verbleibt, so dass durch das Hineinschrauben in die Temperierplatte 4 die Druckplatte 10 mittels der Schraube gegen die Temperierplatte 4 gezogen ist. Diese Schrauben sind längenvariable Verbindungselemente 11, da sie durch ein zunehmendes Hineinschrauben in die Temperierplatte 4 eine zunehmende Annäherung der jeweiligen Druckplatte 10 an die Temperierplatte 4 ermöglichen. Um dies sicherzustellen, sind in den Temperierplatten 4, wie insbesondere in den Figuren 3, 7 und 10 dargestellt, Gewindebohrungen 13 erforderlich, die mindestens so tief sind wie eine maximal mögliche Einschraublänge der als Schrauben ausgebildeten Verbindungselemente 11.

In einer alternativen, hier nicht dargestellten Ausführungsform können die Verbindungselemente 11 beispielsweise auch als Gewindestangen ausgebildet sein, welche fest in der Temperierplatte 4 angeordnet sind. Die Druckplatten 10 sind dann auf die Gewindestangen aufschiebbar, wobei die Gewindestangen durch die Öffnungen 12 in den Druckplatten 10 hindurchzuführen sind, und mittels auf die Gewindestangen aufzuschraubender Muttern an die Temperierplatte 4 anzuschrauben, wodurch sie sich zunehmend an die Temperierplatte 4 annähern und wodurch sich die Druckplatten 10 zunehmend einander nähern, unter zunehmendem Verspannen der dazwischen angeordneten Einzelzellen 3.

In einem weiteren hier nicht dargestellten Ausführungsbeispiel kann die jeweilige Temperierplatte 4 auch mit einer der Druckplatten 10 fest verbunden sein, beispielsweise durch eine stoff-, form- und/oder kraftschlüssige Verbindung, zum Beispiel durch Verschweißen oder Verschrauben, so dass das Verspannen der Einzelzellen 3 im Zellblock 1 durch zunehmendes Verschrauben der jeweils anderen Druckplatte 10 mit der jeweiligen Temperierplatte 4 erfolgt.

In den hier dargestellten Ausführungsbeispielen sind die Einzelzellen 3 im Zellblock 1 von randseitigen Rahmenelementen 14, 15, 16 zumindest bereichsweise umschlossen. In anderen, hier nicht dargestellten Ausführungsbeispielen, in welchen der Zellblock 1 beispielsweise mittels als bipolare Rahmenflachzellen ausgebildeten Einzelzellen 3 gebildet ist, sind derartige randseitige Rahmenelemente 14, 15, 16 Bestandteil der Einzelzellen 3.

Im ersten und zweiten, in den Figuren 1 bis 7 dargestellten Ausführungsbeispiel sind erste und zweite Rahmenelemente 14, 15 als Abstandshalter aus Kunststoff, auch als Spacer bezeichnet, zwischen den Einzelzellen 3 bzw. zwischen den stirnseitigen Einzelzellen 3 des Zellblocks 1 und der jeweiligen Druckplatte 10 ausgebildet, wobei sie jeweils randseitige Rahmenbereiche und einen eine jeweilige Stirnseite der Einzelzelle 3 abdeckenden Mittelbereich aufweisen. Durch die ersten Rahmenelemente 14 sind die Einzelzellen 3 in einem definierten Abstand zueinander gehalten und gegeneinander elektrisch isoliert. Zwischen den stirnseitigen Einzelzellen 3 des Zellblocks 1 und der jeweiligen Druckplatte 10 ist jeweils ein zweites Rahmenelement 15 angeordnet, an welchem lediglich in Richtung der jeweiligen stirnseitigen Einzelzelle 3 die randseitigen Rahmenbereiche ausgeformt sind. An der oberen Längsseite des Zellblocks 1 sind die randseitigen Rahmenbereiche des jeweiligen Rahmenelementes 14, 15 derart voneinander beabstandet, dass die Zellpole 3.1, 3.2 zwischen diesen durchführbar sind.

Die Einzelzellen 3 sind mittels auf den Zellpolen 3.1, 3.2 angeordneter Zellverbinder 9 in diesem Beispiel seriell elektrisch miteinander verschaltet, sie können in weiteren Ausführungsbeispielen jedoch auch parallel miteinander verschaltet sein oder der Zellblock 1 kann eine Kombination von elektrisch seriell und elektrisch parallel miteinander verschalteten Einzelzellen 3 aufweisen. Die Zellverbinder 9, welche in einer Zellverbinderplatine 17 zusammengefasst sind, sind beispielsweise mittels Überlapp-Laserschweißung mit den Zellpolen 3.1, 3.2 verbunden. Die Zellverbinderplatine 17 weist zwei Zellblockpole 17.1, 17.2 auf, über welche der Zellblock 1 elektrisch kontaktierbar ist.

Im dritten, in den Figuren 8 bis 10 dargestellten Ausführungsbeispiel sind die als Pouchzellen ausgebildeten Einzelzellen 3 durch dritte Rahmenelemente 16 im Zellblock 1 fixiert und in einem definierten Abstand zueinander gehalten. D. h. die dritten Rahmenelemente 16 weisen jeweils in der Mittel eine vom Rahmenbereich randseitig umschlossene Ausformung auf, in welcher die jeweilige Einzelzelle 3 angeordnet ist. Jede der Einzelzellen 3 ist zwischen zwei derartigen dritten Rahmenelementen 16, welche an jeweils einer Stirnseite der jeweiligen Einzelzelle 3 randseitig anliegen, eingeklemmt. Durch eine mittels des Verspannens des Zellblocks 1 erzeugte Presskraft sind die Einzelzellen 3 fest zwischen den dritten Rahmenelementen 16 eingeklemmt und kraft- und/oder formschlüssig im Zellblock 1 gehalten.

Die als Ableiterfahnen ausgebildeten Zellpole 3.1, 3.2 benachbarter Einzelzellen 3 sind mittels u-förmiger metallischer Zellverbinder 9, die an den dritten Rahmenelementen 16 befestigt sind, elektrisch miteinander kontaktiert. Dazu sind die Zellpole 3.1, 3.2 beispielsweise mittels Ultraschallschweißung oder Widerstandspressschweißung an den Zellverbindern 9 befestigt. Um dies zu ermöglichen, weisen die dritten Rahmenelemente 16 an zwei gegenüberliegenden Seiten Zellverbinderbereiche 18 auf, auf welche jeweils ein Zellverbinder 9 aufzusetzen ist. Die Zellverbinder 9 und die Zellverbinderbereiche 18 der dritten Rahmenelemente 16 weisen jeweils Ausnehmungen auf. Diese Ausnehmungen dienen einer Aufnahme eines entsprechend geformten Werkzeugs, welches bei der Ultraschallschweißung zur Kontaktierung des jeweiligen Zellpols 3.1, 3.2 mit dem jeweiligen Zellverbinder 9 als Widerlager dient. Damit ist ermöglicht, dass der jeweilige Zellpols 3.1, 3.2 und der jeweilige Zellverbinder 9 bei der Verschweißung mit einer geeigneten Kraft miteinander verpressbar sind, so dass eine flächige Auflage sichergestellt ist und die erzeugte Verbindung eine entsprechend gute elektrische Leitfähigkeit aufweist.

In allen dargestellten Ausführungsformen sind die Temperierplatten 4 jeweils maximal so lang wie alle parallel zueinander ausgerichteten und hintereinander angeordneten Rahmenelemente 14, 15, 16 des jeweiligen Zellblocks 1 zusammen. Auf diese Weise ist ein festes Verspannen der Einzelzellen 3 bei einer vollständigen Annäherung der Druckplatten 10 an die jeweilige Temperierplatte 4 sichergestellt. Um dies auch bei Breitentoleranzen der Rahmenelemente 14, 15, 16 sicherzustellen, ist es vorteilhaft, wenn die Temperierplatten 4 etwas kürzer ausgebildet sind, so dass auch bei einer etwas dünneren Ausbildung einiger Rahmenelemente 14, 15, 16 die Einzelzellen 3 durch die Druckplatten 10 noch ausreichend verspannt sind.

Im ersten und dritten Ausführungsbeispiel, in welchen der Zellblock 1 jeweils zwei Temperierplatten 4 aufweist, welche an gegenüberliegenden Längsseiten des Zellblocks 1 angeordnet sind, umfasst die Spannanordnung lediglich diese beiden Temperierplatten 4, die beiden Druckplatten 10 und die Verbindungselemente 11, da bereits mittels der beiden Temperierplatten 4 das ordnungsgemäße Verspannen der Einzelzellen 3 ermöglicht ist. D. h. es sind keine weiteren Spannelemente 5 erforderlich.

Im zweiten, in den Figuren 5 bis 7 dargestellten Ausführungsbeispiel, in welchem der Zellblock 1 lediglich eine Temperierplatte 4 aufweist, sind zum ordnungsgemäßen Verspannen der Einzelzellen 3 im Zellblock 1 weitere Spannelemente 5 erforderlich, d. h. die Spannanordnung umfasst in diesem Ausführungsbeispiel neben der Temperierplatte 4, den Druckplatten 10 und den Verbindungselementen 11 zusätzlich die weiteren Spannelemente 5. Wie bereits beschrieben, ist die Temperierplatte 4 hier an einer unteren Längsseite des Zellblocks 1 angeordnet und die weiteren Spannelemente 5 sind im Bereich einer der Temperierplatte 4 gegenüber liegenden Längsseite des Zellblocks 1, d. h. im hier dargestellten Beispiel im Bereich einer oberen Längsseite des Zellblocks 1 angeordnet.

Diese weiteren Spannelemente 5 sind im hier dargestellten zweiten Ausführungsbeispiel als Zuganker ausgebildet. In alternativen, hier nicht dargestellten Ausführungsformen können die weiteren Spannelemente 5 jedoch beispielsweise auch als Spannbänder ausgebildet sein, welche den gesamten Zellblock 1 inklusive der beiden Druckplatten 10 in Längsrichtung umspannen, wobei die Einzelzellen 3 durch Anspannen der Spannbänder zu verspannen und zu verpressen sind.

Die in dem dargestellten Ausführungsbeispiel verwendeten, als Zuganker ausgebildeten weiteren Spannelemente 5 sind in Eckbereichen der oberen Längsseite des Zellblocks 1 in Längsrichtung des Zellblocks 1 an diesem entlang von einer Druckplatte 10 zur anderen angeordnet. Sie sind dabei durch Bohrungen 19 in den die Einzelzellen 3 umgebenden ersten und zweiten Rahmenelementen 14, 15 sowie durch zusätzliche Öffnungen 20 in einer der Druckplatten 10 hindurch geführt und in der anderen Druckplatte 10 form-, stoff- und/oder kraftschlüssig befestigt, beispielsweise, wie hier dargestellt, in Gewindeelementen 21, welche in der anderen Druckplatte 10 angeordnet sind, eingeschraubt. Die als Zuganker ausgebildeten weiteren Spannelemente 5 sind zumindest bereichsweise als Gewindestange ausgebildet, d. h. sie weisen an beiden Enden jeweils ein Gewinde auf. Auf diese Weise sind sie mit einem Ende in das jeweilige Gewindeelement 21 der einen Druckplatte 10 einzuschrauben und auf das durch die andere Druckplatte 10 hindurch geführte andere Ende ist jeweils eine Schraubenmutter 22 aufzuschrauben, so dass die Druckplatten 10 durch zunehmendes Aufschrauben der Schraubenmuttern 22 auf das Gewinde des jeweiligen als Zuganker ausgebildeten weiteren Spannelementes 5 gegeneinander zu verspannen sind.

Die in Figur 11 dargestellte Batterie 2 umfasst eine Mehrzahl derartiger Zellblöcke 1, welche elektrisch seriell und/oder parallel miteinander verschaltet sind. Auf diese Weise ist eine Batterie 2 ausgebildet, welche eine für einen jeweiligen Verwendungszweck erforderliche Spannung, Stromstärke und Speicherkapazität aufweist.

Durch das Ausbilden der Spannelemente oder zumindest eines der Spannelemente als Temperierplatte 4 ist eine Gewichts- und Kostenreduktion des Zellblocks 1 und dadurch auch der Batterie 2 sowie eine Verringerung eines zur Installation des Zellblocks 1 in der Batterie 2 erforderlichen Bauraums erreicht, da durch die Temperierplatte 4 oder durch die Mehrzahl von Temperierplatten 4 aus dem Stand der Technik bekannte Spannelemente ersetzbar sind und der Zellblock 1 daher kleiner ausgebildet ist. D. h. mit einem Bauteil, der Temperierplatte 4, sind gleichzeitig zwei Funktionen erfüllbar, das Verspannen der Einzelzellen 3 zu einem Zellblock 1 und das Temperieren der Einzelzellen 3, d. h. das Kühlen und/oder Erwärmen der Einzelzellen 3, um sie auf einer optimalen Betriebstemperatur oder in einem optimalen Betriebstemperaturbereich zu halten. Aufgrund des geringeren erforderlichen Bauraums für den Zellblock 1 in der Batterie 2 ist auch die Batterie 2 kleiner ausgebildet, so dass auch die Batterie 2 einen geringeren Bauraum beispielsweise in einem Fahrzeug erfordert.

Die Batterie 2 ist beispielsweise eine Fahrzeugbatterie, insbesondere eine Traktionsbatterie für ein Elektrofahrzeug, für ein Fahrzeug mit Hybridantrieb oder für ein Brennstoffzellenfahrzeug. Eine derartige Traktionsbatterie dient als Energiespeicher für elektrische Energie zum Antrieb des Fahrzeugs.

Insbesondere aufgrund der ermöglichten kleineren Ausbildung des Zellblocks 1 und dadurch der Batterie 2, welche einen oder mehrere dieser Zellblöcke 1 aufweist, ist eine Bauraum- und Gewichtsreduktion erreicht, welche insbesondere für einen Einsatz als Traktionsbatterie in einem Elektrofahrzeug, in einem Fahrzeug mit Hybridantrieb oder in einem Brennstoffzellenfahrzeug von großer Bedeutung ist, in welchem nur ein begrenzter Bauraum für die Batterie 2 oder eine Mehrzahl derartiger Batterien 2 zur Verfügung steht. Durch die Bauraumreduktion sind weitere derartige Batterien 2 einzusetzen und auf diese Weise beispielsweise eine Reichweite des Fahrzeugs zu steigern oder es steht bei gleich bleibender Batterieanzahl ein größerer Raum im Fahrzeug für Passagiere und Gepäck zur Verfügung. Des Weiteren ist durch die erreichte Gewichtsreduktion ein Energieverbrauch des Fahrzeugs aufgrund des geringeren Gewichts erreicht, so dass dessen Reichweite erhöht ist, und zudem ist aufgrund eines geringeren Leergewichts des Fahrzeugs eine höhere mögliche Zuladung in das Fahrzeug erreicht. Durch die erreichte Kostenreduktion des Zellblocks 1 und der Batterie 2 ist bei einem derartigen Einsatz als Fahrzeugbatterie zudem auch eine Kostenreduktion des Fahrzeugs erreicht.

### Bezugszeichenliste

- 1: Zellblock
- 2: Batterie
- 3: Einzelzelle
- 3.1, 3.2: Zellpol
- 4: Temperierplatte
- 5: weiteres Spannelement
- 6: Kanal
- 7: Anschlusselement
- 8: Wärmeleitfolie
- 9: Zellverbinder
- 10: Druckplatte
- 11: Verbindungselement
- 12: Öffnung
- 13: Gewindebohrung
- 14: erstes Rahmenelement
- 15: zweites Rahmenelement
- 16: drittes Rahmenelement
- 17: Zellverbinderplatine
- 17.1, 17.2: Zellblockpol
- 18: Zellverbinderbereich
- 19: Bohrung
- 20: zusätzliche Öffnung
- 21: Gewindeelement
- 22: Schraubenmutter

## Patentansprüche

1. Zellblock (1) für eine Batterie (2), mit einer Mehrzahl seriell und/oder parallel elektrisch miteinander verschalteter elektrochemischer Einzelzellen (3), welche als Flachzellen ausgebildet sind, im Zellblock (1) im Wesentlichen parallel zueinander ausgerichtet und hintereinander angeordnet sind und mittels zumindest eines Spannelementes miteinander verspannt sind,
**dadurch gekennzeichnet, dass**
das Spannelement als eine Temperierplatte (4) zur Temperierung der Einzelzellen (3) ausgebildet ist, welche an einer Längsseite des Zellblocks (1) angeordnet und mit den Einzelzellen (3) thermisch gekoppelt ist.

2. Zellblock (1) nach Anspruch 1,
**dadurch gekennzeichnet, dass**
die Temperierplatte (4) ein Bestandteil einer Spannanordnung ist, wobei die Spannanordnung zwei Druckplatten (10) aufweist, welche an jeweils einer Querseite des Zellblocks (1) angeordnet sind, und zumindest ein Verbindungselement (11) zum Verbinden zumindest einer der Druckplatten (10) mit der Temperierplatte (4).

3. Zellblock (1) nach Anspruch 2,
**dadurch gekennzeichnet, dass**
das Verbindungselement (11) als Schraube zum Verschrauben zumindest einer der Druckplatten (10) mit der Temperierplatte (4) ausgebildet ist.

4. Zellblock (1) nach einem der Ansprüche 1 bis 3,
**dadurch gekennzeichnet, dass**
die Einzelzellen (3) randseitige Rahmenelemente (14, 15, 16) aufweisen oder im Zellblock (1) von randseitigen Rahmenelementen (14, 15, 16) zumindest bereichsweise umschlossen sind, wobei die Temperierplatte (4) maximal so lang ist wie alle parallel zueinander ausgerichteten und hintereinander angeordneten Rahmenelemente (14, 15, 16) des Zellblocks (1) zusammen.

5. Zellblock (1) nach einem der vorhergehenden Ansprüche,
umfassend zwei Temperierplatten (4), welche an gegenüberliegenden Längsseiten des Zellblocks (1) angeordnet sind.

6. Zellblock (1) nach einem der vorhergehenden Ansprüche,
umfassend zumindest ein weiteres Spannelement (5) zum Verspannen der Einzelzellen (3).

7. Zellblock (1) nach Anspruch 6,
**dadurch gekennzeichnet, dass**
das weitere Spannelement (5) als ein Zuganker oder als ein Spannband ausgebildet ist.

8. Batterie (2) mit zumindest einem Zellblock (1) nach einem der Ansprüche 1 bis 7.

9. Batterie (2) nach Anspruch 8,
umfassend eine Mehrzahl elektrisch seriell und/oder parallel miteinander verschalteter Zellblöcke (1).

10. Batterie (2) nach Anspruch 8 oder 9,
**dadurch gekennzeichnet, dass**
ie Batterie (2) eine Fahrzeugbatterie ist, insbesondere eine Traktionsbatterie für ein Elektrofahrzeug, für ein Fahrzeug mit Hybridantrieb oder für ein Brennstoffzellenfahrzeug.

## Claims

1. Cell block (1) for a battery (2), having a plurality of electrochemical single cells (3) electrically connected to each other in series and / or in parallel, which are configured as flat cells, orientated substantially parallel to each other and arranged one behind the other in the cell block (1) and tensioned with respect to each other by means of at least one tensioning element,
**characterised in that**
the tensioning element is configured as a temperature control plate (4) to control the temperature of the single cells (3) which is arranged on a longitudinal side of the cell block (1) and thermally coupled to the single cells (3).

2. Cell block (1) according to claim 1,
**characterised in that**
the temperature control plate (4) is an integral part of a tensioning arrangement, wherein the tensioning arrangement has two pressure plates (10) which are arranged on opposite transverse sides of the cell block (1), and at least one connecting element (11) to connect at least one of the pressure plates (10) to the temperature control plate (4).

3. Cell block (1) according to claim 2,
**characterised in that**
the connecting element (11) is configured as a screw to screw at least one of the pressure plates (10) to the temperature control plate (4).

4. Cell block (1) according to one of claims 1 to 3,
**characterised in that**
the single cells (3) have frame elements (14, 15, 16) on an edge side or are enclosed at least in areas in the cell block (1) by frame elements (14, 15, 16) on an edge side, wherein the temperature control plate (4) has a maximum length equal to the combined length of all the frame elements (14, 15, 16) of the cell block (1) orientated parallel to each other and arranged one behind the other.

5. Cell block (1) according to one of the preceding claims,
comprising two temperature control plates (4) which are arranged on opposite longitudinal sides of the cell block (1).

6. Cell block (1) according to one of the preceding claims,
comprising at least one further tensioning element (5) to tension the single cells (3).

7. Cell block (1) according to claim 6,
**characterised in that**
the further tensioning element (5) is configured as a tension rod or as a tightening strap.

8. Battery (2) having at least one cell block (1) according to one of claims 1 to 7.

9. Battery (2) according to claim 8,
comprising a plurality of cell blocks (1) electrically connected to each other in series and / or in parallel.

10. Battery (2) according to claim 8 or 9,
**characterised in that**
the battery (2) is a vehicle battery, in particular a traction battery for an electric vehicle, for a vehicle with a hybrid drive or for a fuel cell vehicle.

## Revendications

1. Bloc d'éléments (1) pour une batterie (2) ayant une pluralité d'éléments individuels (3) électrochimiques reliés ensemble électriquement en série et/ou en parallèle, lesquels sont conçus comme des éléments plats, qui sont alignés parallèle les uns aux autres et disposés les uns derrière les autres dans le bloc d'éléments (1) et qui sont serrés les uns contre les autres au moyen d'au moins un élément de serrage, **caractérisé en ce que** l'élément de serrage est conçu comme une plaque d'équilibrage de température (4) destinée à équilibrer la température des éléments individuels (3), ledit élément de serrage étant disposé sur une face longitudinale du bloc d'éléments (1) et couplé thermiquement aux éléments individuels (3).

2. Bloc d'éléments (1) selon la revendication 1, **caractérisé en ce que** la plaque d'équilibrage de température (4) fait partie intégrante d'un système de serrage, le système de serrage présentant deux plaques de pression (10), qui sont disposées de chaque côté transversal du bloc d'éléments (1), et au moins un élément de liaison (11) destiné à relier au moins l'une des plaques de pression (10) à la plaque d'équilibrage de température (4).

3. Bloc d'éléments (1) selon la revendication 2, **caractérisé en ce que** l'élément de liaison est conçu comme une vis destinée à viser au moins l'une des plaques de pression (10) à la plaque d'équilibrage de température (4).

4. Bloc d'éléments (1) selon l'une quelconque des revendications 1 à 3, **caractérisé en ce que** les éléments individuels (3) présentent des éléments de cadre (14, 15, 16) marginaux ou sont entourés au moins en partie dans le bloc d'éléments (1) par des éléments de cadre (14, 15, 16) marginaux, la plaque d'équilibrage de température (14, 15, 16) étant au maximum aussi longue que tous les éléments de cadre (14, 15, 16) ensemble disposés parallèles les uns aux autres et disposés les uns derrière les autres du bloc d'éléments (1).

5. Bloc d'éléments (1) selon l'une quelconque des revendications précédentes, comprenant deux plaques d'équilibrage de température (4) qui sont disposées sur des côté longitudinaux opposés du bloc d'éléments (1).

6. Bloc d'éléments (1) selon l'une quelconque des revendications précédentes, comprenant au moins un autre élément de serrage (5) destiné à serrer les éléments individuels (3).

7. Bloc d'éléments (1) selon la revendication 6, **caractérisé en ce que** l'autre élément de serrage (5) est conçu en qu'ancre de traction ou en tant que bande de serrage.

8. Batterie (2) dotée d'au moins un bloc d'éléments (1) selon l'une quelconque des revendications 1 à 7.

9. Batterie (2) selon la revendication 8, comprenant une pluralité de blocs d'éléments (1) commutés électriquement ensemble en parallèle et/ou en série.

10. Batterie (2) selon la revendication 8 ou la revendication 9, **caractérisée en ce que** la batterie (2) est une batterie de véhicule automobile, en particulier une batterie de traction pour un véhicule électrique, pour un véhicule automobile doté d'un moteur hybride ou encore un véhicule automobile à piles à combustible.
